Europäisches Patentamt

European Patent Office

Office européen des brevets

(19)

(11) Publication number: **0 354 625**

**A2**

(12) **EUROPEAN PATENT APPLICATION**

(21) Application number: 89202070.2

(22) Date of filing: 09.08.89

(51) Int. Cl.⁴: **B60C 7/12**

(30) Priority: 09.08.88 NL 8801992

(43) Date of publication of application:
14.02.90 Bulletin 90/07

(84) Designated Contracting States:
AT BE CH DE ES FR GB GR IT LI LU NL SE

(71) Applicant: **Colijn, Antonius**
**Grootmeede 73**
**NL-4337 AB Middelburg(NL)**

(72) Inventor: **Colijn, Antonius**
**Grootmeede 73**
**NL-4337 AB Middelburg(NL)**

(74) Representative: **Hoorweg, Petrus Nicolaas et al**
**OCTROOIBUREAU ARNOLD & SIEDSMA**
**Sweelinckplein 1**
**NL-2517 GK The Hague(NL)**

(54) **A device for roll supporting vehicles.**

(57) A device for roll supporting vehicles provided with a rotatably mounted wheel 1 along the outer edge of which the heel 4 of a conventional rubber balloon tyre 3 is fitted by fastening means 9 and whereby in the rubber tyre 3 is arranged at least one annular body 12 which supports the annular running portion 5 thereof and which is rigid relative to the tyre, such that use can be made of the normal outer tyre without air pressure therein being necessary, which is mainly of importance in those countries where it is difficult to repair a tyre or to obtain replacement tyres.

FIG. 1

# DEVICE FOR ROLL SUPPORTING VEHICLES

The invention relates to a device for roll supporting vehicles provided with a conventional rubber balloon tyre.

The balloon tyres in question are usually the rubber outer tyres for vehicles such as cycles, automobiles and trucks, which rubber outer tyres are provided on the one hand with an airtight inner tyre wherein a determined air pressure is generated in order to achieve the required roll diameter and resistance. On the other hand it is possible to embody the rubber tyre such that it lies airtight against the bearing wheel rim, whereby the air pressure can be generated directly in the outer tyre. In certain regions such a construction is disadvantageous because when the tyre punctures the air pressure cannot be built up, with the result that the outer tyre is no longer usable. It is the object of the invention to obviate this drawback, which is mainly of importance in those countries where it is difficult to repair a tyre or to obtain replacement tyres.

The invention has for its object to provide a device for the roll supporting of vehicles whereby use is made of a normal outer tyre without air pressure therein being necessary.

The device according to the invention is distinguished by a rotatably mounted wheel along the outer edge of which the heel of the automobile tyre is mounted by means of fastening means and whereby arranged in the rubber tyre is at least one annular body which supports the annular running portion thereof and which is rigid relative to the tyre.

In one embodiment the rigid annular body is constructed of a circular strip of material which is arranged at a distance relative to the inner wall of the running surface and filling means are arranged between the strip and the inner wall.

In order to achieve the required flexibility of the wheel it is recommended that the cheeks of the tyre are connected to one another by tensioning members.

The advantage of the supporting body arranged in the tyre is that the tyre not only maintains the required rolling resistance and rolling diameter but that the sideways flexibility is also great. This latter is particularly important when using the device employed as support system for slow-moving vehicles, such as oxcarts and the like. The replacement and fitting of the tyre can be performed by personnel with little expertise.

The invention will be further elucidated in the figure description below of a number of embodiments.

In the drawing:

fig. 1 shows a perspective view of the device according to the invention in a first embodiment,

fig. 2 shows a perspective view corresponding with fig. 1 of an alternative embodiment,

fig. 3 and 4 each show a cross-section of a second and third alternative embodiment.

In the figures the same parts are designated with the same reference numerals.

A solid wheel 1 is rotatably supported by means of or on a shaft 2 which is connected in a manner not further specified to a vehicle, for example an oxcart or other slow-moving vehicle. It is hereby immaterial whether the wheel 1 is rotatable with bearings relative to the shaft 2 or the shaft 2 is rotatable in bearings relative to the wagon.

Arranged along the periphery of the circular wheel 1 is a rubber tyre 3 of the conventional type, that is, the tyre 3 consists of a heel 4, a running surface 5 and cheeks 6 extending between heel 4 and running surface 5.

According to the invention the heel 4 is provided with through-holes 7 which come to lie opposite through-holes 8 in the wheel 1 and those in a ring 17. The holes 8 are situated close to the periphery of the wheel 1. Fastening means in the form of bolts 9 are passed through the holes whereby the bolt-head 10 lies on the one side against the ring 17 while on the other side a nut 11 is fastened to the threaded part of bolt 9 and lies against the ring situated opposite.

In this way a firm fixing of the rubber tyre 3 relative to the wheel 1 is effected.

An important feature of the invention is that in the space of the rubber tyre bounded by the rubber itself and the outer periphery of the wheel 1 a supporting body 12 is arranged. In the embodiment shown the supporting body consists of a strip of material 13 bent into a circle which is constructed from sections, whereby each section is provided with an attaching flange 14 or the like which strike against each other and are fixed to each other by means of bolts 15. Placed between the cylindrical outer surface of the ring 13 and the inner wall of the rubber running surface 5 are filling means in the form of circle segments 16. The circle segments 16 can be formed adjoining each other into a continuous body but can however also be at a determined distance relative to each other. The body 16 can be built up in any other random manner, for example by an annular body having a cross-section as the circle segment shown.

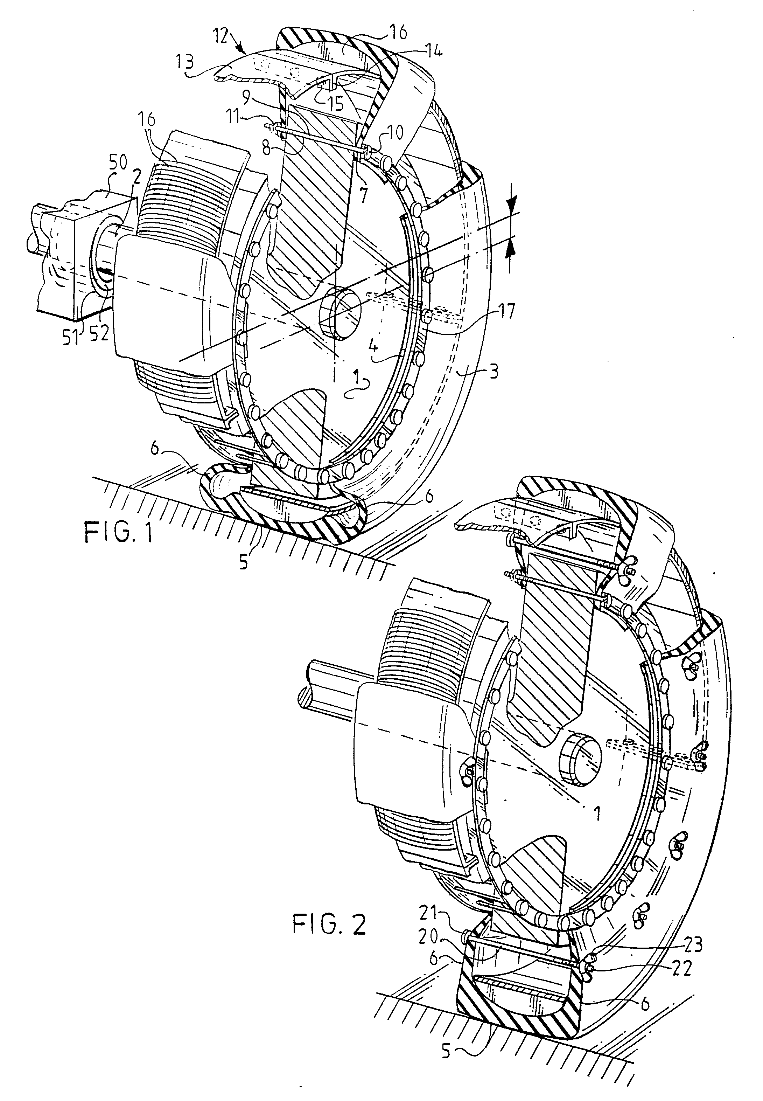

As a result of the annular strip 13 of the filling body 6 the running surface 5 is held in the correct shape, also when in an extreme case of bumping the wheel 1 compresses entirely as shown at the bottom of fig. 1 and the cheeks 6 are completely folded.

Tests have established that wear to the tyre as a result of this deformation hardly occurs. On the contrary, the sideways flexibility is found to be great, also when the running surface 5 is situated far outside the wheel 1. After negotiating a bend the tyre automatically readjusts to the shape shown in fig. 1.

Fig. 2 shows an alternative embodiment which is particularly distinguished from that in fig. 1 by the arrangement of pull rods 20 which here consist of a bolt with a fixed head 21 which comes to lie against the one cheek 6 while the bolt 20 has a threaded portion 22 on which is arranged a wing nut 23 which presses against the opposite cheek 6. Arranging of the pull rods 20 at regular mutual intervals can ensure that the cheeks 6 do not fold out too far as shown in fig. 1. By tightening the wing nuts 23 the maximum deflection of the cheeks 6 can be adjusted, which defines the flexibility of the tyre in radial and axial sense. As a result the wheel 1 can compress to a greater or lesser extent relative to the running surface 5, this depending on the application.

The action of this tyre is further the same as that in fig. 1.

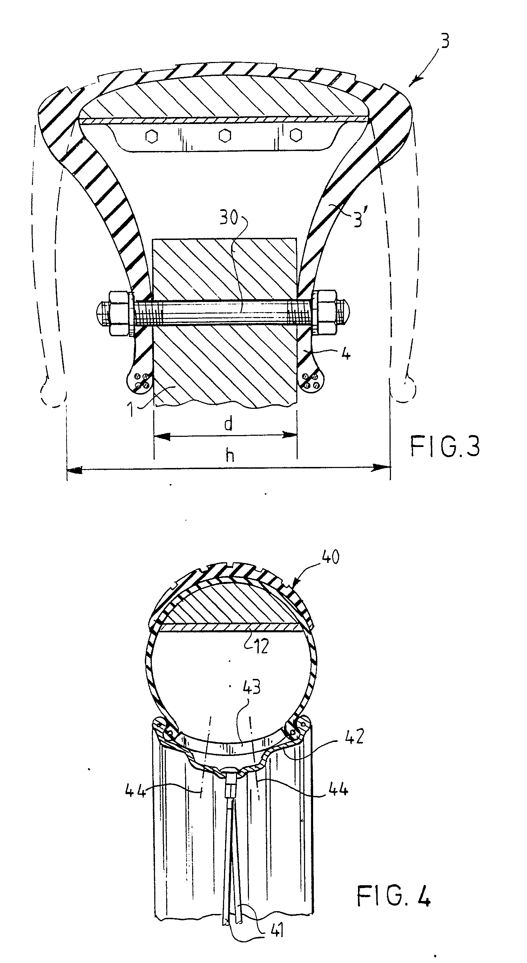

Fig. 3 shows an embodiment which combines the fastening bolts 8 and pull rods 20. To this end the heel portion 4 is pulled against the side wall of the rim by draw bolts 30 placed towards the outside such that the cheek 3 of the tyre 3 is biased inward. The thickness of the rim 1 is hereby smaller than the heel size h normally prescribed for the tyre.

Fig. 4 shows a cycle tyre 40 on a wheel rim 42 supported by spokes 41. The tyre lacks the usual inner tyre which is replaced here by the supporting body 12 with filling means 16. The heel of the tyre is here held in its usual place by a segment ring portion 43 which is screwed into place in the rim 42 by screws (not shown) or the like, see dashed line 44.

For the sake of completeness it is noted that fig. 1 also shows a possible shaft support suitable for slow-turning shafts. Arranged in the bearing block 50, which can be fixed to a wagon in random manner, is an oversize hole 51 such that a bearing ring 52 can be fitted around the shaft. The ring too has a capacious hole for the shaft. When the shaft turns the ring will start to rotate at a speed of at most half that of the shaft, which results in less friction and less wear.

## Claims

1. Device for roll supporting vehicles provided with a conventional rubber vehicle tyre for cycles, automobiles or trucks provided with a heel, a running surface and cheek portions extending between them, **characterized by** a rotatably mounted wheel along the outer edge of which said heel of the tyre is fitted by fastening means and that arranged in the automobile tyre is at least one annular body which supports the annular running portion thereof and which is rigid relative to said tyre.

2. Device as claimed in claim 1, **characterized in that** the annular body consists of a strip of material bent to form a circle whereby filling means are arranged between said strip of material and the inner wall of the running surface portion of the tyre.

3. Device as claimed in claims 1 and 2, **characterized in that** the filling means are formed by circle segment-shaped slats.

4. Device as claimed in claims 1-3, **characterized in that** the annular strip of material is built up of sections to be mutually connected.

5. Device as claimed in any of the foregoing claims, **characterized in that** the cheek portions of the tyre are mutually connected by tensioning members, for example a draw bolt.

6. Device as claimed in claim 5, **characterized in that** the draw bolt is also used as fastening means whereby the thickness (d) of the rim is smaller than the prescribed heel size (h) of the tyre.

7. Device as claimed in any of the foregoing claims, **characterized in that** the fastening means are one or more annular parts (43) which are fixed in a standard wheel rim.

8. Bearing for a shaft provided with a bearing hole and a bearing ring, **characterized in that** the hole has an oversize diameter relative to the ring and the ring an over-size diameter relative to the shaft.

FIG. 1

FIG. 2

FIG.3

FIG. 4